# EUROPÄISCHE PATENTANMELDUNG

(11) **EP 2 107 275 A1**
(43) Veröffentlichungstag der Anmeldung: **07.10.2009**
(21) Anmeldenummer: 09075235.3
(22) Anmeldetag: 13.02.2009
(51) Int. Cl.: F16H 47/08, F16H 3/00

(54) **Automatgetriebe mit wenigstens einem Planetensatz**

(30) Priorität: 20.02.2008 DE 102008010064
(71) Anmelder: Voith Patent GmbH, 89522 Heidenheim (DE)
(72) Erfinder: Busch, Jörg, 89551 Königsbronn-Zang (DE)
(74) Vertreter: Dr. Weitzel & Partner

(57) **Zusammenfassung**

Die Erfindung betrifft ein Automatgetriebe (1) mit wenigstens einem Planetensatz (4). Erfindungsgemäß ist ein parallel zu diesem Planetensatz (4) verlaufender Weg der Drehmomentübertragung vorhanden. In einer Gangstufe muss daher der Planetensatz (4) des Getriebes nicht zur Drehmomentübertragung genutzt werden. Daher ist in dieser Gangstufe die Kopplungsstruktur des Planetensatzes (4) über Kupplungs- und/oder Bremselemente veränderbar.

## Beschreibung

Die Erfindung betrifft ein Automatgetriebe mit wenigstens einem Planetensatz.

Gattungsgemäße Automatgetriebe sind allgemein bekannt. Beispielhaft soll hier auf die DE 20 21 543 A1 verwiesen werden, welche ein kombiniert hydrodynamisch - mechanisches Getriebe für Fahrzeuge mit Teilung der Traktionsleistung mittels eines Differentialgetriebes auf einen Kraftweg mit einem hydrodynamischen Wandler und einen parallel dazu liegenden mechanischen Kraftweg und mit einer Zusammenführung der Traktionsleistung auf einen gemeinsamen Kraftweg beschreibt. Dabei weist das Getriebe mechanische, wahlweise ein- und ausschaltbare Übersetzungsstufen (Gängen) im hydrodynamischen und/oder mechanischen und/oder im gemeinsamen Kraftweg auf.

Diese so genannten Differentialwandlergetriebe (DIWA) werden im Antrieb von Fahrzeugen verschiedener Art angewandt. Dabei werden im DIWA - Getriebe, wie üblicherweise in allen Automatgetrieben, mehrere Planetensätze verwendet. Diese Planetensätze werden in einem vorbestimmten festen Koppelschema miteinander verbunden. Mit Lamellenkupplungen beziehungsweise Lamellenbremsen werden dann die verschiedenen Übersetzungen des Getriebes realisiert. Mit den Lamellen der Kupplungen beziehungsweise Bremsen wird typischerweise erreicht, dass es zu Schaltungen ohne Zugkraftunterbrechung kommt.

Den bekannten vielfältigen Vorteilen der DIWA - Getriebe stehen als Nachteil der hohe Bauteilaufwand von zwei Planetensätzen und drei Kupplungen im Eingangdifferential gegenüber. Außerdem ist die Wandlerbremse im 1. Gang nicht sinnvoll verfügbar, weshalb als Ausweg auf das Bremsen mit den Rückwärtsganglamellen zurückgegriffen wird.

Es ist daher die Aufgabe der hier vorliegenden Erfindung, ein Automatgetriebe dahingehend zu verbessern, dass mit weniger Bauraum und weniger Bauteilen ein vergleichbares Automatgetriebe, insbesondere mit der selben Anzahl an Gängen, oder mit dem selben Bauraum ein optimiertes Automatgetriebe, insbesondere mit einer größeren Zahl an Gängen, möglich ist.

Erfindungsgemäß wird diese Aufgabe durch die im kennzeichnenden Teil von Anspruch 1 genannten Merkmale gelöst.

Die erfindungsgemäße Idee die Kopplungsstruktur eines Planetensatzes zu ändern, während dieser als Ganzes ohne Relativdrehzahl seiner Bauteile zueinander umläuft, ohne ein Antriebsmoment zu übertragen, ermöglicht es entweder mit der selben Anzahl an Bauteilen mehr Übersetzungen (Gangstufen) zu realisieren, oder aber die selbe Anzahl an Übersetzungen mit weniger Bauteilen und entsprechend weniger Bedarf an Bauraum umzusetzen.

Damit werden die typischen Vorteile der Schaltgetriebe, nämlich die variable Kopplungsstruktur und der einfache Aufbau mit dem großen Vorteil der Automatgetriebe, nämlich dem Schalten ohne Zugkraftunterbrechung verbunden.

In einer besonders günstigen und vorteilhaften Weiterbildung der Erfindung ist die Kopplungsstruktur über zwei Klauenkupplungen veränderbar.

Im Vergleich zu Lamellenkupplungen sind Klauenkupplungen einfache und kostengünstige Bauteile. Klauenkupplungen haben sich bei Schaltungen mit minimalen Differenzdrehzahlen zwischen den Schaltelementen bewährt. Aber auch bei höheren Differenzdrehzahlen ergeben sich mit Synchronisierungen einwandfreie und schnelle Schaltvorgänge, wenn dabei nicht das Antriebsmoment, sondern nur die Trägheits- und Reibungskräfte übertragen werden müssen. Mit den einfachen und effizient arbeitenden Klauenkupplungen kann daher die Kopplungsstruktur einfach und mit wenig Bedarf an Bauraum geändert werden.

In einer vorteilhaften Ausgestaltung der Erfindung sind die Klauenkupplungen hydraulisch betätigt.

Da Klauenkupplungen lassen sich hydraulisch einfach betätigen, da sie nur geöffnet und geschlossen werden müssen. Anders als bei den Lamellenkupplungen ist hierzu keine exakte Ansteuerung eines Betätigungsdrucks während des gesamten Schaltvorgangs notwendig. Vielmehr können beide Klauenkupplungen gemeinsam mit einem die Kupplungen betätigenden konstanten Druck angesteuert werden.

In einer besonders günstigen Ausgestaltung der Ansteuerung der Klauenkupplungen, werden die betätigten Kupplungen durch Federelemente zurückgestellt.

Dies ist einfach und effektiv, da die Rückstellung nach dem Absenken des Betätigungsdruckes automatisch erfolgt. Dies spart eine weitere Leitung zur Ansteuerung beziehungsweise Betätigung der Rückstellung und trägt damit zu einem einfachen und kompakten Automatgetriebe bei.

Eine Weiterbildung der Erfindung sieht vor, dass das Automatgetriebe einen hydrodynamischen Wandler aufweist.

Damit sind die bekannten Vorteile eines mechanisch hydrodynamischen Automatgetriebes auch mit der Erfindung nutzbar.

In einer besonders günstigen und vorteilhaften Weiterbildung hiervon, ist es vorgesehen; dass Getriebe so auszubilden, dass in der niedrigsten Gangstufe das Pumpenlaufrad des hydrodynamischen Wandler frei drehbar ist.

Untersuchungen und Erfahrungen haben gezeigt, dass das freie Drehen des Pumpenlaufrads zu einer extremen Steigerung des Bremsmoments führt. Mit dem erfindungsgemäßen Aufbau kann dieses Bremsmoment nun genutzt werden.

In einer sehr günstigen Variante der Erfindung, wird die Änderung der Kopplungsstruktur mit nur einem einzigen Planetensatz in einem Eingangsbereich des Getriebes realisiert.

Damit kann bei gleicher Gangzahl wie bisher eine deutliche Optimierung im Bauraum, insbesondere in der Baulänge des Getriebes erreicht werden.

In einer weiteren sehr günstigen Variante der Erfindung, wird die Änderung der Kopplungsstruktur an einem von zwei Planetensätzen in einem Eingangsbereich des Getriebes realisiert.

Hierbei erfolgt zwar keine Einsparung an Bauraum, dafür wird eine zusätzliche Gangstufe realisiert.

In einer sehr vorteilhaften Weiterbildung hiervon überträgt auch der zweite Planetensatz in einer Gangstufe kein Drehmoment und ist in dieser Gangstufe in seiner Kopplungsstruktur über weitere Kupplungs- und/oder Bremselemente veränderbar.

Indem die erfindungsgemäße Idee auf beide Planetensätze angewandt wird, kann hier bei gleichem Bauraum - wie im Stand der Technik - ein weiterer zusätzlicher Gang realisiert werden.

Weitere vorteilhafte Ausgestaltungen ergeben sich ferner aus den restlichen Unteransprüchen und aus den Ausführungsbeispielen, welche nachfolgend anhand der Figuren beispielhaft erläutert werden.

Die Erfindung wird dabei anhand der Eingangsgruppe eines hydrodynamisch-mechanischen Automatgetriebes exemplarisch detailliert dargestellt. Die Idee der Erfindung, die Kopplungsstruktur eines Planetensatzes zu verändern, während dieser ohne Differenzdrehzahl dreht, ist jedoch weder auf eine Eingangsgruppe noch auf ein hydrodynamisch-mechanisches Getriebe beschränkt. Sie kann analog auch für beliebige andere Baugruppen eines Automatgetriebes eingesetzt werden.

Dabei zeigen:
- Figur 1: in schematisch vereinfachter Darstellung den Grundaufbau eines hydrodynamisch-mechanischen Automatgetriebes nach dem Stand der Technik;
- Figur 2: in schematisch vereinfachter Darstellung den Grundaufbau einer Ausführungsform des Eingangsbereichs des hydrodynamisch- mechanischen Automatgetriebes gemäß der Erfindung;
- Figur 3: verschiedene möglich Varianten der Ausgestaltung einer Klauenkupplung;
- Figur 4: eine exemplarische Darstellung einer Klauenkupplung mit Synchronisierung in zwei Schaltzuständen;
- Figur 5: den Grundaufbau einer Ausführungsform des hydrodynamisch- mechanischen Automatgetriebes gemäß der Erfindung in Neutralstellung;
- Figur 6: den Grundaufbau einer Ausführungsform des hydrodynamisch- mechanischen Automatgetriebes mit Darstellung des Kraftflusses im 1. Gang;
- Figur 7: den Grundaufbau einer Ausführungsform des hydrodynamisch- mechanischen Automatgetriebes mit Darstellung des Kraftflusses im 2. Gang;
- Figur 8: den Grundaufbau einer Ausführungsform des hydrodynamisch- mechanischen Automatgetriebes mit Darstellung des Kraftflusses im 3. Gang, mit Kopplungsstruktur des Eingangsbereichs für den 2. Gang;
- Figur 9: den Grundaufbau einer Ausführungsform des hydrodynamisch- mechanischen Automatgetriebes mit Darstellung des Kraftflusses im 3. Gang, mit Kopplungsstruktur des Eingangsbereichs für den 4. Gang;
- Figur 10: den Grundaufbau einer Ausführungsform des hydrodynamisch- mechanischen Automatgetriebes mit Darstellung des Kraftflusses im 4. Gang;
- Figur 11: den Grundaufbau einer Ausführungsform des hydrodynamisch- mechanischen Automatgetriebes mit Darstellung des Kraftflusses beim Bremsen im 4. Gang;
- Figur 12: den Grundaufbau einer Ausführungsform des hydrodynamisch- mechanischen Automatgetriebes mit Darstellung des Kraftflusses beim Bremsen im 3. Gang, mit Kopplungsstruktur des Eingangsbereichs für den 4. Gang;
- Figur 13: den Grundaufbau einer Ausführungsform des hydrodynamisch- mechanischen Automatgetriebes mit Darstellung des Kraftflusses beim Bremsen im 2. Gang;
- Figur 14: den Grundaufbau einer Ausführungsform des hydrodynamisch- mechanischen Automatgetriebes mit Darstellung des Kraftflusses beim Bremsen über die Lamellen der Rückwärtskupplung im 1. Gang;
- Figur 15: den Grundaufbau einer Ausführungsform des hydrodynamisch- mechanischen Automatgetriebes mit Darstellung des Kraftflusses beim Bremsen über den Wandler im 1. Gang;
- Figur 16: den Grundaufbau einer Ausführungsform des hydrodynamisch- mechanischen Automatgetriebes mit Darstellung des Kraftflusses beim verstärkten Bremsen mit freiem Pumpenlaufrad im 1. Gang;
- Figur 17: den Grundaufbau einer Ausführungsform des hydrodynamisch- mechanischen Automatgetriebes mit Darstellung des Kraftflusses beim "Automatischen Neutral im Stillstand" (ANS);
- Figur 18: den Grundaufbau einer Ausführungsform des hydrodynamisch- mechanischen Automatgetriebes mit Darstellung des Kraftflusses im Rückwärtsgang;
- Figur 19: eine alternative konstruktive Ausführung des Eingangsbereichs des hydrodynamisch-mechanischen Automatgetriebes mit Klauenkupplungen;
- Figur 20: eine zweite alternative konstruktive Ausführung des Eingangsbereichs des hydrodynamisch-mechanischen Automatgetriebes mit Klauenkupplungen;
- Figur 21: eine dritte alternative konstruktive Ausführung des Eingangsbereichs des hydrodynamisch-mechanischen Automatgetriebes mit Klauenkupplungen;
- Figur 22: eine vierte alternative konstruktive Ausführung des Eingangsbereichs des hydrodynamisch-mechanischen Automatgetriebes mit Klauenkupplungen;
- Figur 23: eine alternative konstruktive Ausführung des Eingangsbereichs des hydrodynamisch-mechanischen Automatgetriebes mit Lamellenkupplungen und einer Klauenkupplung;
- Figur 24: eine weitere konstruktive Ausführung des Eingangsbereichs des hydrodynamisch-mechanischen Automatgetriebes mit fünf Lamellenkupplungen;
- Figur 25: eine zweite konstruktive Ausführung des Eingangsbereichs des hydrodynamisch-mechanischen Automatgetriebes mit fünf Lamellenkupplungen;
- Figur 26: eine dritte konstruktive Ausführung des Eingangsbereichs des hydrodynamisch-mechanischen Automatgetriebes mit vier Lamellenkupplungen;
- Figur 27: ein Eingangsbereich einer Ausgestaltung des hydrodynamisch- mechanischen Automatgetriebes als Fünfganggetriebe;
- Figur 28: ein Eingangsbereich einer Ausgestaltung des hydrodynamisch- mechanischen Automatgetriebes als Fünfganggetriebe in einer alternativen konstruktiven Ausführung;
- Figur 29: ein Eingangsbereich einer Ausgestaltung des hydrodynamisch- mechanischen Automatgetriebes als Fünfganggetriebe in einer zweiten alternativen konstruktiven Ausführung;
- Figur 30: ein Eingangsbereich einer Ausgestaltung des hydrodynamisch- mechanischen Automatgetriebes als Fünfganggetriebe in einer dritten alternativen konstruktiven Ausführung;
- Figur 31: ein Eingangsbereich einer Ausgestaltung des hydrodynamisch- mechanischen Automatgetriebes als Fünfganggetriebe in einer vierten alternativen konstruktiven Ausführung;
- Figur 32: ein Eingangsbereich einer Ausgestaltung des hydrodynamisch- mechanischen Automatgetriebes als Fünfganggetriebe in einer fünften alternativen konstruktiven Ausführung; und
- Figur 33: ein Eingangsbereich einer Ausgestaltung des hydrodynamisch- mechanischen Automatgetriebes als Sechsganggetriebe.

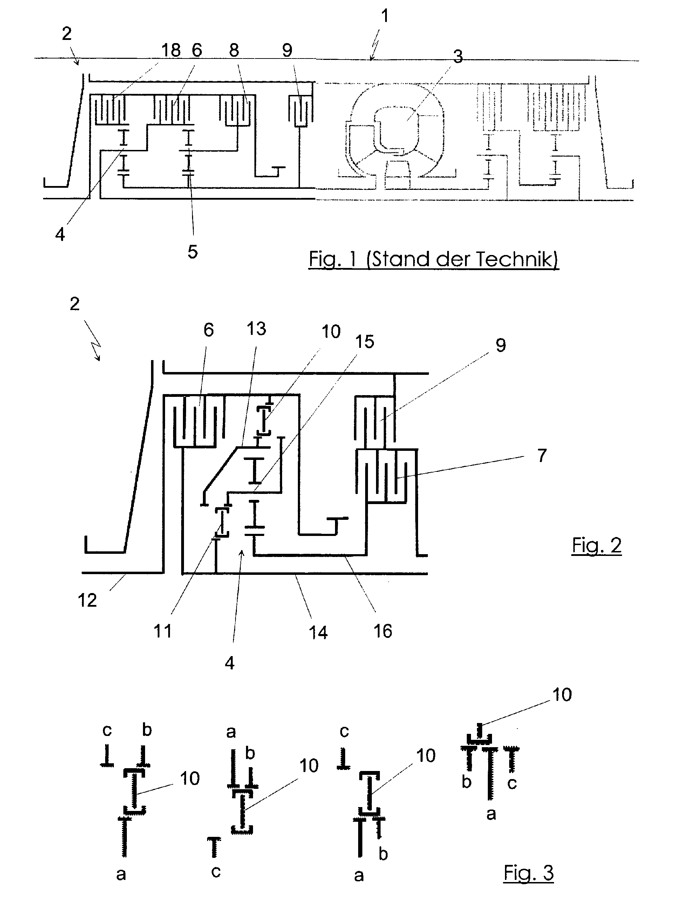

In Figur 1 ist ein typisches hydrodynamisch-mechanisches Automatgetriebe 1 dargestellt. Dabei ist nur der für das Ausführungsbeispiel relevante Teil des Eingangsbereichs 2 durchgezogen dargestellt, das restliche hier nicht relevante Getriebe ist in hellerem Ton gezeichnet. Der Eingangsbereich 2 eines solchen, hydrodynamisch-mechanischen Automatgetriebes 1 besteht aus zwei Planetensätzen 4, 5, drei Kupplungen 6, 18, 8 und einer Bremse 9. Um in der für Automatgetriebe üblichen Art und Weise ohne Unterbrechung der Zugkraft schalten zu können, sind die Kupplungen als Lamellenkupplungen 6, 18, 8 ausgeführt. Die Leistung steht also ohne schaltbedingte Zugkraftunterbrechung am Getriebeausgang zur Verfügung.

Mit dem in Figur 1 dargestellten Vierganggetriebe lassen sich vier Vorwärtsgänge und ein Rückwärtsgang darstellen, wobei die Leistung, wie für hydrodynamisch-mechanische Getriebe üblich, im 1. Gang hydrodynamisch und mechanisch übertragen wird. Mit zunehmender Abtriebsdrehzahl steigt dabei der Anteil der mechanischen Leistungsübertragung zu dem der hydrodynamischen Leistungsübertragung an. Somit lässt sich ein sehr "langer" 1. Gang realisieren, welcher einen hohen Drehzahlbereich abdeckt. In den weiteren drei Gängen wird die Leistung beziehungsweise Drehzahl dann rein mechanisch übertragen.

So verläuft durch die Lamellenkupplungen 6, 18, 8 beziehungsweise die Bremse 9 - zum Beispiel im 2. Gang - der Kraftfluss im ersten Planetensatz 4 vom Hohlrad außen zum Steg innen. Damit wird eine Übersetzung ins langsame erreicht. Im 3. Gang verläuft der Kraftfluss direkt, ohne Über- oder Untersetzung, über den Steg beziehungsweise Planetenträger des ersten Planetensatzes 4. Im 4. Gang kommt der zweite Planetensatz 5 zum Einsatz. Durch den Kraftfluss von Steg innen auf das Hohlrad außen kommt es zur gewünschten Übersetzung ins Schnelle.

In Figur 2 ist nun eine mögliche Variante des erfindungsgemäßen Aufbaus zu erkennen. Dabei ist hier nur der Eingangsbereich 2 dargestellt, der weitere Teil des hydrodynamisch - mechanischen Getriebes, da er für die hier vorliegende Ausführungsform der Erfindung nicht weiter von Interesse ist, kann analog dem Stand der Technik - wie er in Figur 1 dargestellt ist - aufgebaut sein.

Anstelle der beiden Planetensätze 4, 5 reicht hier ein einziger Planetensatz 4 aus. Da eine der Lammellenkupplungen 6, 18, 8 doppelt verwendet wird, kann eine Lamellenkupplung entfallen. Anstelle des Umschaltens von dem einen Planetensatz 4 auf den anderen Planetensatz 5, wird hier die Kopplungsstruktur des einen Planetensatzes 4 geändert. Die bevorzugte, hier dargestellte Ausführungsform der Erfindung weist dazu zwei Klauenkupplungen 10, 11 auf.

Der erfindungsgemäße Aufbau erlaubt über die erste Lamellenkupplung 6 (Durchgangskupplung) einen direkten Kraftfluss vom Getriebeeingang zum Getriebeausgang. Dies entspricht dem direkten 3. Gang, bei dem im Stand der Technik der Kraftfluss ebenfalls ohne Über- oder Untersetzung, jedoch über den Steg beziehungsweise Planetenträger des ersten Planetensatzes 4 verläuft. Entgegen dem Stand der Technik, läuft der Eingangskorb bestehend aus der zweiten Lamellenkupplung 7 (Pumpenkupplung), dem Hohlrad beziehungsweise Außenkranz, dem Planetenträger beziehungsweise Steg und der Pumpenwelle des hydrodynamischen Wandlers 3 im 3. Gang ohne Relativdrehzahl der Bauteile untereinander um. Nun wird die Kopplungsstruktur genau in diesem 3. Gang geändert. Wegen der fehlenden Relativdrehzahl der Bauteile des Eingangskorbs kann dies mit den einfachen Klauenkupplungen 10, 11 erfolgen. Der Planetensatz 4 überträgt zu diesem Zeitpunkt im 3. Gang kein Antriebsmoment, nur das Reibmoment der offenen Lamellenkupplung 7 (Pumpenkupplung) liegt an. Diese kleinen Momente begünstigen jedoch den schnellen Schaltvorgang, da Verzögerungen durch Kopf - an - Kopf liegende Schaltelemente ausgeschlossen werden.

Die Klauenkupplungen 10, 11 sind dabei so ausgeführt, wie sie auch bei Schaltgetrieben üblich sind. Im Vergleich zu den Lamellenkupplungen sind Klauenkupplungen einfache und billige Bauteile. Außerdem müssen diese nur geöffnet und geschlossen werden, so dass anders als bei den Lamellenkupplungen keine exakte Ansteuerung eines Betätigungsdrucks während des gesamten Schaltvorgangs notwendig ist. Vielmehr können beide Klauenkupplungen 10, 11 gemeinsam mit angesteuert werden. Im Falle einer hydraulischen Ansteuerung reicht dafür ein konstanter die Kupplungen betätigender Druck aus. Die Rückstellung kann durch Federn erreicht werden. Alternativ dazu kann die Ansteuerung auch mechanisch erfolgen. Dazu können beispielsweise Hebel zur Betätigung der Klauenkupplungen 10, 11 eingesetzt werden, welche aus dem Gehäuse des Getriebes beziehungsweise dem sich drehenden Eingangskorb herausgeführt und damit einfach ansteuerbar sein können.

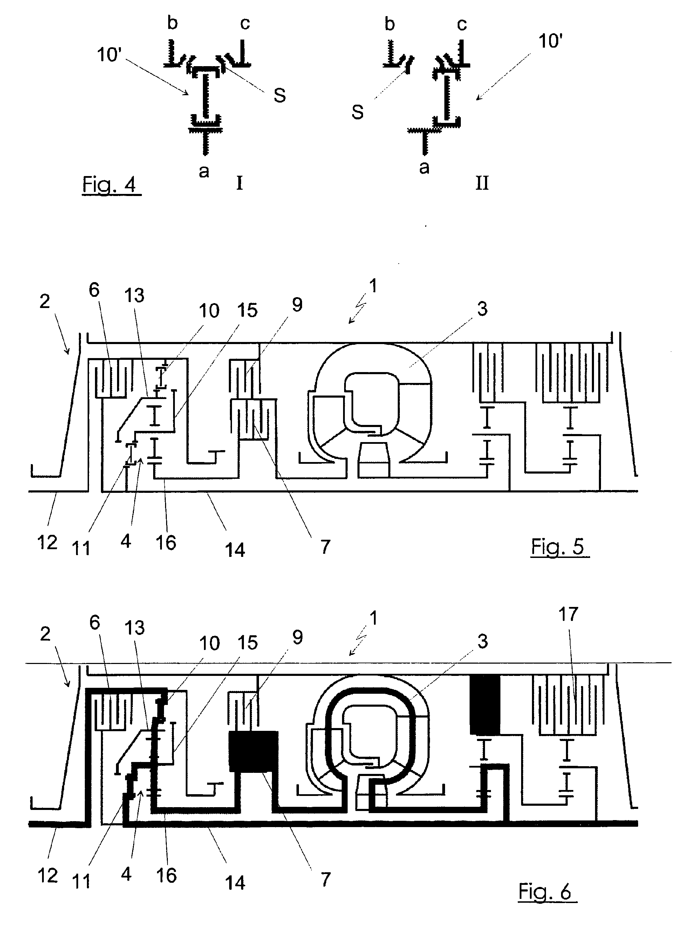

Die Klauenkupplungen können dabei in verschiedenen Varianten aufgebaut sein und in verschiedenen Varianten geschaltet werden. In Figur 3 sind dafür verschiedene fachübliche Beispiele dargestellt, bei der in verschiedenen Anordnungen jeweils die Verbindung von a nach b auf die Verbindung von a nach c umgeschaltet wird. Die formschlüssige Verbindung der zentralen Seite kann dabei durch beliebige Führungen ausgeführt werden. Neben den üblicherweise häufig verwendeten Verzahnungen können allgemein alle formschlüssigen, aber axial verschiebbaren Verbindungen verwendet werden. Auch bei den Klauenverzahnungen sind beliebige Formen, sowohl der Klauenverzahnung als auch der Kopfform denkbar. Grundsätzlich ist es natürlich möglich, die Klauenkupplungen 10 durch solche mit Synchronisierungen S zu ersetzen, wie sie in Schaltgetrieben üblich sind. Eine entsprechende Darstellung möglicher Klauenkupplungen 10' mit Synchronisierung S findet sich in Figur 4. Die Darstellung I zeigt dabei die Neutralstellung, die Darstellung II den geschalteten Zustand. Aufgrund der fehlenden oder allenfalls minimalen Relativdrehzahl der Bauteile des Einganskorbes kann der Aufwand für Synchronisierungen jedoch typischerweise eingespart werden.

Die nachfolgenden Figuren 5 bis 18 zeigen den Kraftfluss durch das Getriebe in allen Gangstufen, am Beispiel eines DIWA - Getriebes mit einem Eingangsbereich 2 gemäß der Erfindung. Dabei ist der sich an das Eingangsbereich 2 gemäß Figur 2 anschließende Teil analog dem in Figur 1 ausgebildet. Daher werden in der Beschreibung nur die Schaltzustände des Eingangsbereichs 2 erläutert. Die Schaltzustände des Getriebeabtriebs entsprechen denen des DIWA - Getriebes gemäß dem Stand der Technik und sind dem Fachmann geläufig.

In der Figur 5 ist die Neutral-Stellung zu erkennen. Die Klauenkupplungen 10, 11 haben dabei immer den Kopplungszustand für den 1. Gang. Die erste Klauenkupplung 10 verbindet dabei also den Antrieb 12 mit dem Außenkranz 13 des Planetensatzes 4. Die Planetenträgerwelle 14 ist über die zweite Klauenkupplung 11 mit dem Steg 15 des Planetensatzes 4 verbunden. Die Pumpenkupplung 7 trennt den Leistungsfluss zwischen Eingang und Ausgang.

In Figur 6 ist die 1. Gangstufe zu erkennen. Durch schließen der Pumpenkupplung 7 wird der hydrodynamisch-mechanische Leistungsfluss vom Eingang zum Ausgang geschlossen. Wie bei DIWA - Getrieben üblich, wird ein Teil der Leistung über den hydrodynamischen Wandler 3, ein Teil mechanisch übertragen. Im Zuge der Drehzahlsteigerung in dem sehr "langen" 1. Gang wird dabei der Anteil an mechanischer Leistungsübertragung stetig anwachsen.

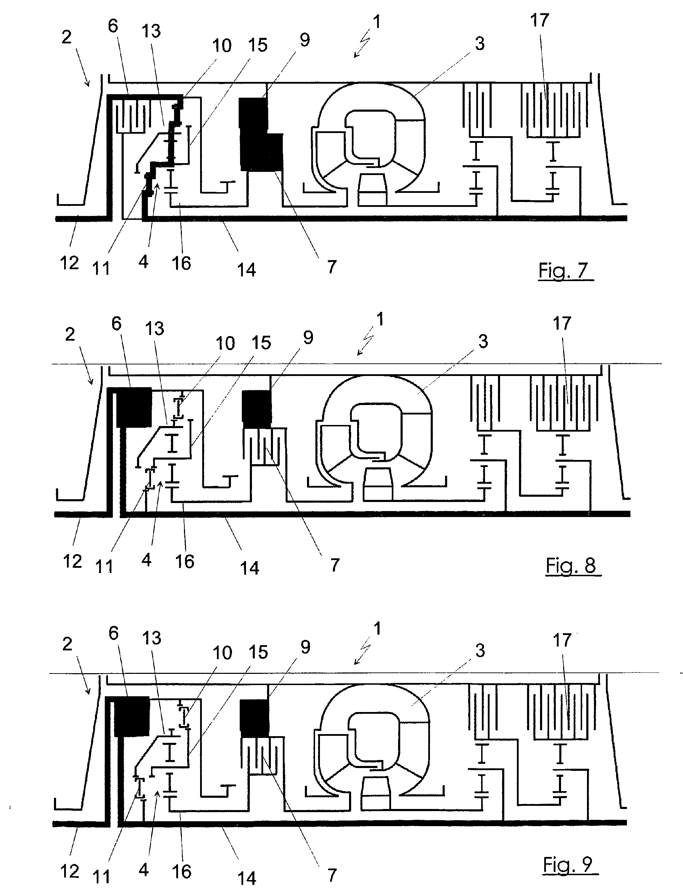

In dem in Figur 7 dargestellten 2. Gang wird durch Schließen der Pumpenbremse 9 eine rein mechanische Leistungsübertragung erreicht. Der Planetensatz 4 sorgt dabei weiterhin für eine Übersetzung ins Langsame.

In Figur 8 wird jetzt der direkte 3. Gang - mit der Übersetzung 1 - durch Schließen der ersten Lamellenkupplung 6 (Durchgangskupplung) erreicht. Die Pumpenkupplung 7 wird dabei geöffnet. Der Planetensatz 4 rotiert nun ohne Relativbewegung des Stegs 15, der Sonne 16 und des Außenkranzes 13 zueinander. Über den Planetensatz wird somit kein Antriebsmoment übertragen. Nur das Reibmoment der geöffneten Lamellen der Pumpenkupplung 7 liegt an.

In diesem Zustand können nun die beiden Klauenkupplungen 10, 11 gleichzeitig umgeschaltet oder nacheinander werden. Man erreicht damit eine Umkehr der Kopplungsstruktur des Planentensatzes 4 von einer Übersetzung ins Langsame hin zu einer Übersetzung ins Schnelle. Dieses in Figur 9 dargestellte Kraftflussdiagramm ist zwar weiterhin das des 3. Gangs, jedoch mit erfolgter Vorbereitung zum Hochschalten in den 4. Gang. Zwischen den beiden Zuständen, Vorbereitung für den 2. Gang oder Vorbereitung für den 4. Gang, kann schnell, je nach Fahrsituation und erforderlichem Hochschalten aus dem 3. in den 4. Gang oder Herunterschalten aus dem 3. in den 2. Gang, umgeschaltet werden.

In der Vorbereitung zum 4. Gang koppelt die erste Klauenkupplung 10 nun den Antrieb 12 mit dem Steg 15, während die zweite Klauenkupplung 11 den Außenkranz 13 des Planetensatzes 4 mit der Planetenträgerwelle 14, das heißt dem Abtrieb, verbindet.

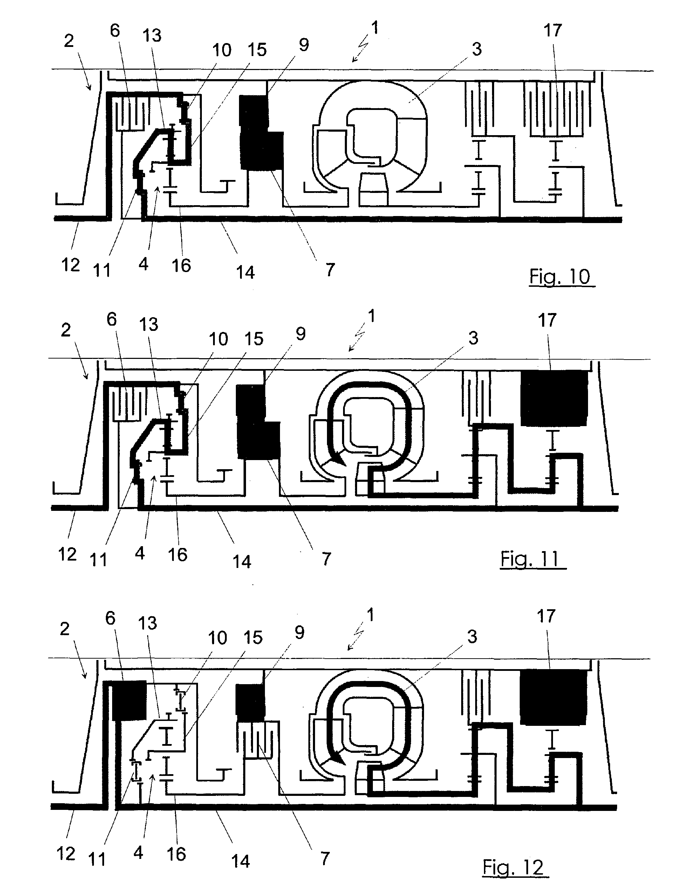

Durch Schließen der Pumpenkupplung 7, bei gleichzeitigem Öffnen der Durchgangskupplung 6, wird dann - wie in Figur 10 dargestellt, der 4. Gang aktiviert.

Neben der Übertragung von Leistung zu Antriebszwecken, können hydrodynamisch-mechanische Getriebe ferner zum Bremsen eingesetzt werden. In den nachfolgenden Figuren sind die dazu notwendigen Schaltungen beziehungsweise die damit korrelierenden Kraftflüsse dargestellt. Dabei entspricht das Bremsen in den mechanischen Gängen dem des Standes der Technik. Zwischen den Gängen wird dabei analog der oben bereits beschriebenen Art geschaltet.

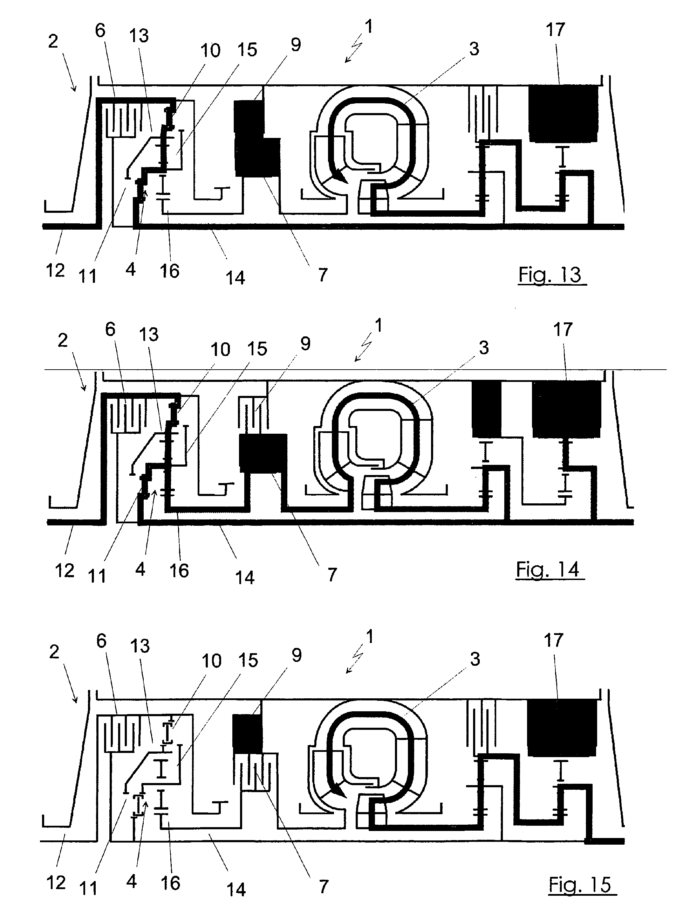

Figur 11 zeigt das Bremsen im 4. Gang. Figur 12 zeigt das Bremsen im 3. Gang. Figur 13 zeigt das Bremsen im 2. Gang. Die Kopplungsstruktur des Planetensatzes 4 wurde dabei beim Herunterschalten von der in Figur 12 noch vorliegenden Struktur auf die hier in Figur 13 vorliegende Kopplungsstruktur durch Betätigung der beiden Klauenkupplungen 10, 11 erfindungsgemäß - analog der obigen Beschreibung - geändert.

In Figur 14 ist eine erste Möglichkeit zum Bremsen im 1. Gang dargestellt. Diese Variante ist auch beim Stand der Technik üblich. Da das Bremsmoment, das bei den niedrigen Drehzahlen des 1. Gangs im Wandler 3 eher gering ist werden die Lamellen einer Lamellenkupplung 17, welche typischerweise nur im Rückwärtsgang geschlossen wird, leicht angelegt, um durch das Reibmoment die Bremskraft zu steigern.

Eine weitere Variante des Bremsens im 1. Gang, wie sie mit der Erfindung möglich wird, zeigt Figur 15. Beim Erreichen der Leerlaufdrehzahl des Motors im 2. Gang wird die Pumpenkupplung 7 geöffnet. Die Wandlerbremse 3 kann somit auch im 1. Gang aktiv bleiben, da das Pumpenlaufrad stillsteht. Es kann also weiterhin gleichzeitig mit dem Wandler 3 gebremst werden. Der Motor am Eingang kann dabei vom Getriebe 1 durch die Pumpenkupplung 7 getrennt werden, so dass er frei im Leerlauf ist und nicht in seiner Drehzahl zu tief gedrückt wird.

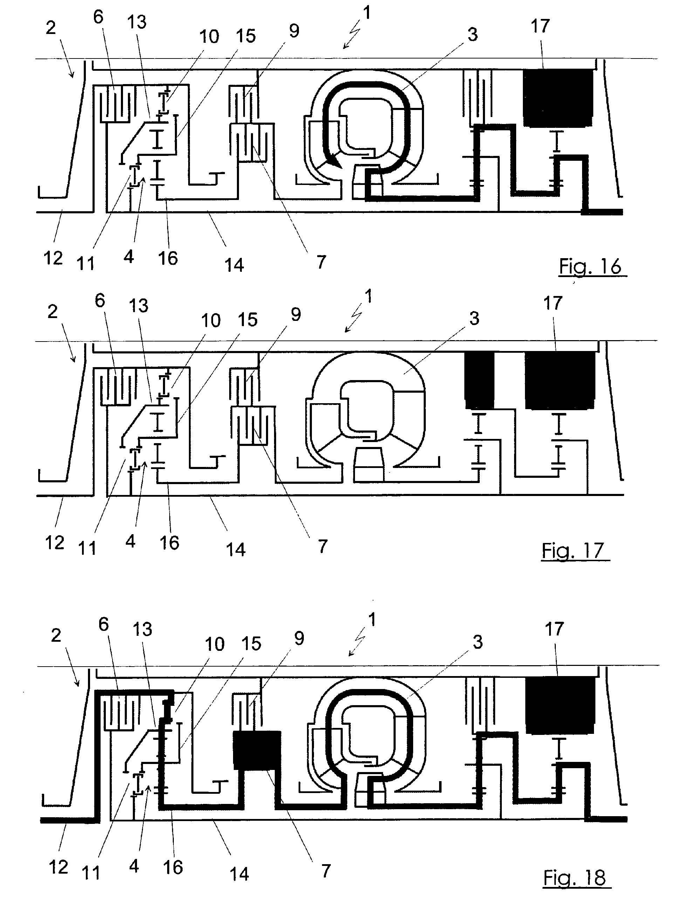

Eine verstärkte Bremswirkung gegenüber dem bisher Beschriebenen kann durch zusätzliches Öffnen der Pumpenbremse 9 erzeugt werden. Dann ist es - wie in Figur 16 zu erkennen - nämlich möglich, das Pumpenlaufrad des Wandlers 3 im 1. Gang frei drehen zu lassen. Untersuchungen und Erfahrungen haben gezeigt, dass das freie Drehen des Pumpenlaufrads zu einer extremen Steigerung des Bremsmoments führt. Mit dem erfindungsgemäßen Aufbau kann dieses Bremsmoment nun genutzt werden. Durch die spezielle Anordnungen der Pumpenkupplung 7 wird ein schneller und sicherer Übergang vom Bremsen mit freiem Pumpenlaufrad zum Anfahren durch einfaches Schließen der Pumpenkupplung 7 ermöglicht.

In Figur 17 ist zur Vervollständigung der Darstellung noch das Automatische Neutral beim Stillstand des Fahrzeuges (ANS) dargestellt, welches sich nicht von Stand der Technik unterscheidet. In Figur 18 ist der Rückwärtsgang beim erfindungsgemäßen Getriebe dargestellt, welcher durch die angezogene Lamellenkupplung 17 als hydrodynamischer Gang analog dem Stand der Technik ausgebildet ist.

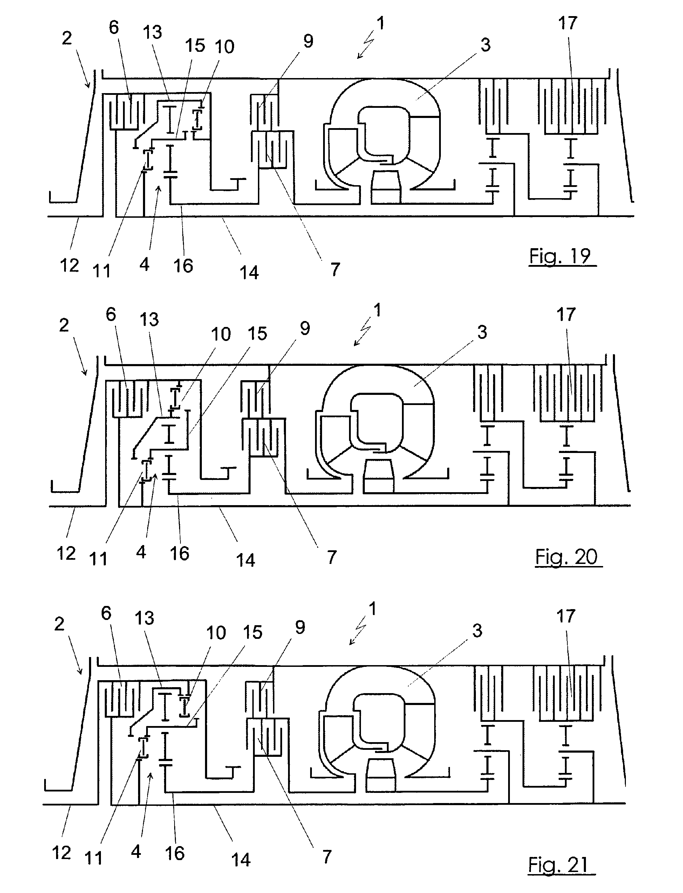

Figur 19 zeigt eine alternative konstruktive Ausführung des Eingangsbereichs 2 des Getriebes 1. Dabei ist die erste Klauenkupplung 10 nicht wie bei den bisherigen Darstellungen zwischen dem Außenkranz 13 und dem Gehäuse des Getriebes 1 angeordnet, sondern neben dem Planetensatz 4. Die zweite Klauenkupplung kann auch neben dem Planetensatz angeordnet werden. Damit lässt sich ein im Durchmesser wesentlich größerer Planetensatz 4 verwenden. Dieser kann einerseits wesentlich größere Drehmomente übertragen, andererseits ist eine Geradverzahnung für den Planetensatz 4 bei geringerer Zahnbreite denkbar. Ohne die Axialkräfte einer Schrägverzahnung können Lager und Bauteile einfacher gestaltet werden. Daraus ergeben sich ebenfalls Vorteile hinsichtlich des Bauraums und der Kosten.

In den folgenden Figuren 20 bis 26 sind weitere alternative Möglichkeiten der konstruktiven Umsetzung der erfinderischen Änderung der Kopplungsstruktur dargestellt, jeweils wieder am Beispiel des DIWA - Vierganggetriebes mit im Sinne der Erfindung geändertem Eingangsbereich. Die Figuren 20 bis 22 zeigen ähnlich wie die Figur 19 alternative Anordnungen der Klauenkupplungen 10, 11, aus welchen der Fachmann je nach Anforderungen und zur Verfügung stehendem Bauraum eine geeignete Anordnung auswählen kann.

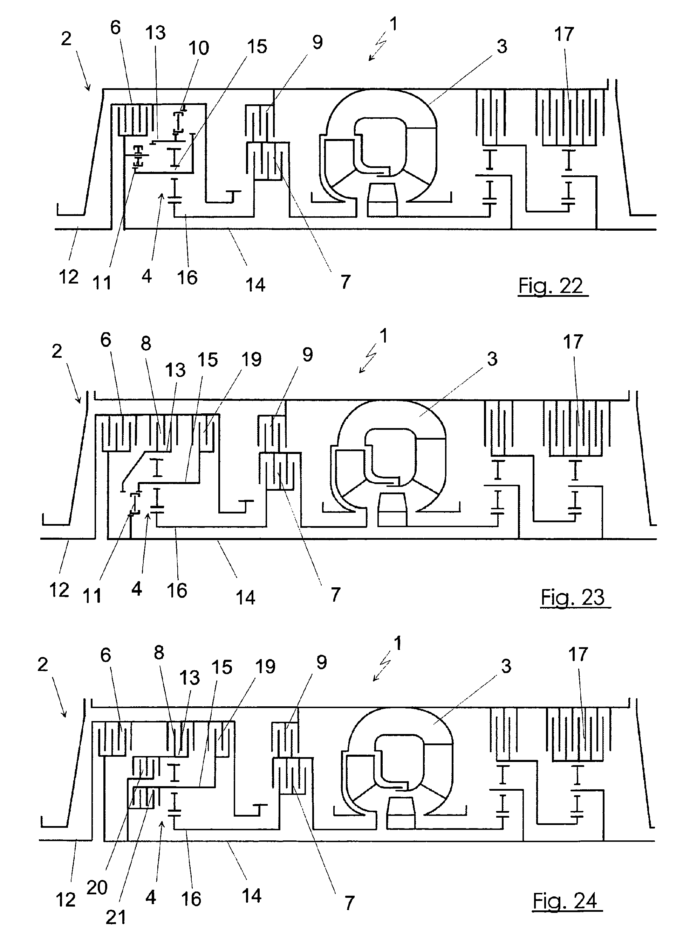

Figur 23 zeigt, dass die Klauenkupplungen 10, 11 nur eine mögliche Ausführung sind. Bei der hier gewählten konstruktiven Umsetzung ist die erste Klauenkupplung 10 durch zwei Lamellenkupplungen 8, 19 ersetzt. Diese beiden Lamellenkupplungen 8, 19 werden ebenfalls im lastfreien Zustand geschaltet. Sie bilden Schalt-Lamellenkupplungen 8, 19, welche keine Relativbewegungen und Antriebsmomente synchronisieren müssen, sondern nur im geschlossenen Zustand das Drehmoment übertragen. Der Druck auf die beiden Lamellenpakete der Kupplungen 8, 19 kann daher gleichzeitig zum Umschalten der Klauenkupplung 11 verwendet werden. Für die beiden Schalt-Lamellenkupplungen 8, 19 und die Klauenkupplung 11 wird also zusammen nur ein Steuerdruck auf konstantem Niveau benötigt, eine gezielte Ansteuerung des Druckverlaufs, wie bei Lamellenkupplungen sonst üblich, kann entfallen.

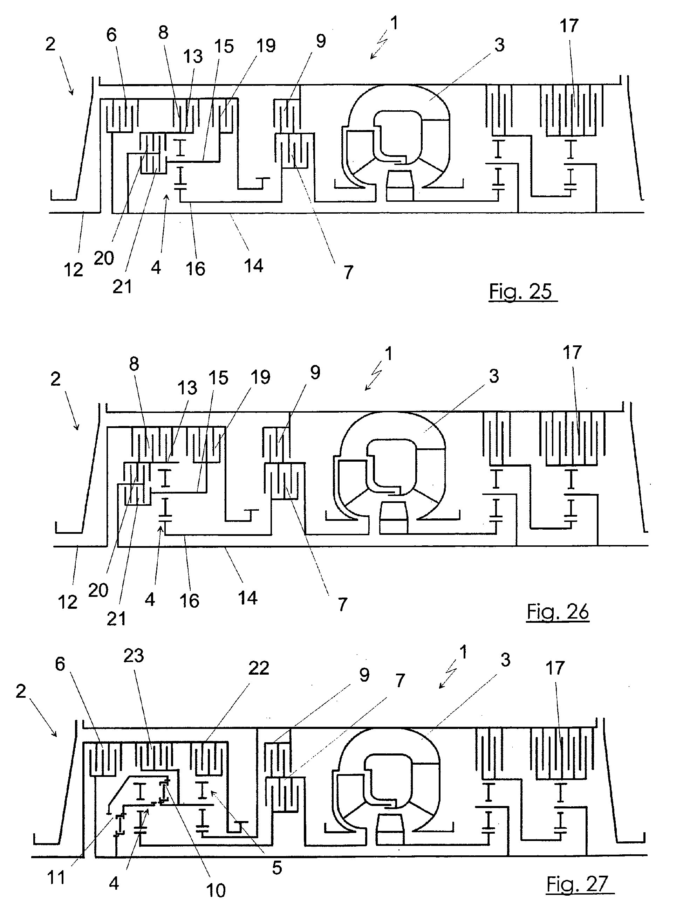

Im Beispiel der Figur 24 werden nun beide Klauenkupplungen 10, 11 durch insgesamt vier Lamellenkupplungen 8, 19, 20, 21 ersetzt. Auch hier können alle vier Lamellenkupplungen 8, 19, 20, 21 als Schalt-Lamellenkupplungen 8, 19, 20, 21 ausgebildet sein, da sie keine Synchronisierung durchführen müssen, sondern nur im geschlossenen Zustand die Drehmomente übertragen. Jeweils zwei der vier Schalt-Lamellenkupplungen 8, 19, 20, 21 werden wiederum hydraulisch miteinander gekoppelt. In Figur 25 sind nun die beiden Lamellenkupplungen 20, 21 so zusammengefasst, dass der Lamellenträger der einen Kupplung mit dem der anderen zusammengefasst wird. Dies spart Bauteile und Bauraum ein.

Wenn nun wieder Lamellenkupplungen eingesetzt werden, dann können anders als bei den einfachen Klauenkupplungen auch wieder Drehmomente während des Schaltens übertragen werden. In Figur 26 ist daher auf die Durchgangskupplung 6 als direkte Durchgangskupplung verzichtet worden. Ohne die Durchgangskupplung 6 muss nun beim Ändern der Kopplungsstruktur ein Drehmoment übertragen werden. Im so entstehenden Eingangsbereich 2 können wieder jeweils zwei der vier Lamellenkupplungen 8, 19, 20, 21 hydraulisch miteinander gekoppelt werden. Im einfachsten Steuerungsfall müssen alle vier Lamellenkupplungen 8, 19, 20, 21 Synchronisierungsaufgaben erledigen. Werden jeweils zwei der hydraulisch gekoppelten Lamellenkupplungen 18, 19, 20, 21 so geschaltet, dass eine Lamellenkupplung immer als erstes geschlossen ist, so kann die andere als reine Schalt-Lamellenkupplung kleiner dimensioniert werden. Die Sicherstellung der Reihenfolge der Lamellenkupplung kann durch geeignete Dimensionierung der hydraulischen Verbindungen (zum Beispiel mit Drosseln) und den Kupplungsdimensionen erfolgen.

Der erfindungsgemäße Aufbau, insbesondere in der Ausgestaltung mit Klauenkupplungen, ermöglicht es, Bauraum, insbesondere Baulänge des Vierganggetriebes, einzusparen. Falls dieser Bauraum jedoch ohnehin zu Verfügung steht, kann er auch genutzt werden, um eine höhere Zahl an Gängen zu erreichen, ohne mehr oder zumindest wesentlich mehr Bauraum zu benötigen als beim Vierganggetriebe gemäß dem Stand der Technik. Dafür muss jedoch für ein solches Fünfganggetriebe der zweite Planetensatz 5 wieder hinzugenommen werden.

In Figur 27 und den folgenden Figuren ist eine zusätzliche schaltbare Übersetzung zur Drehmomenterhöhung im Leistungsfluss vor dem eigentlichen Differential mit einer Lamellenkupplung 22 (Eingangskupplung) eingefügt. Mit einer weiteren Lamellenkupplung 23 (Zweite Durchgangskupplung) wird der zweite Planetensatz 5 überbrückt. Die eingefügte Übersetzung wirkt im 1. Gang und im rein mechanischen 2. Gang. Danach wird der zweite Planetensatz 5 überbrückt und der "frühere" 2. Gang des analogen Vierganggetriebes als 3. Gang geschaltet. Der 4. und 5. Gang sind dann wieder gleich dem 3. und 4. Gang des Vierganggetriebes. Für Sonderfälle wäre es auch denkbar, zwei hydrodynamisch - mechanische Gänge anzusteuern. Die Drehmomente zum Wandler 3 und zur Planetenträgerwelle werden erhöht. Für niedrigere Drehmomentklassen (zum Beispiel D85x) müssen weder der Wandler 3 noch der Abtriebsteil des Getriebes 1 gegenüber dem herkömmlichen Vierganggetriebe angepasst werden. Für höhere Drehmomente müssen jedoch Anpassungen vorgenommen werden.

Da sich der Eingangsplanetensatz 5 nicht auf der Pumpenwelle abstützt, bleibt die Drehmomentverteilung des Differentials gleich.

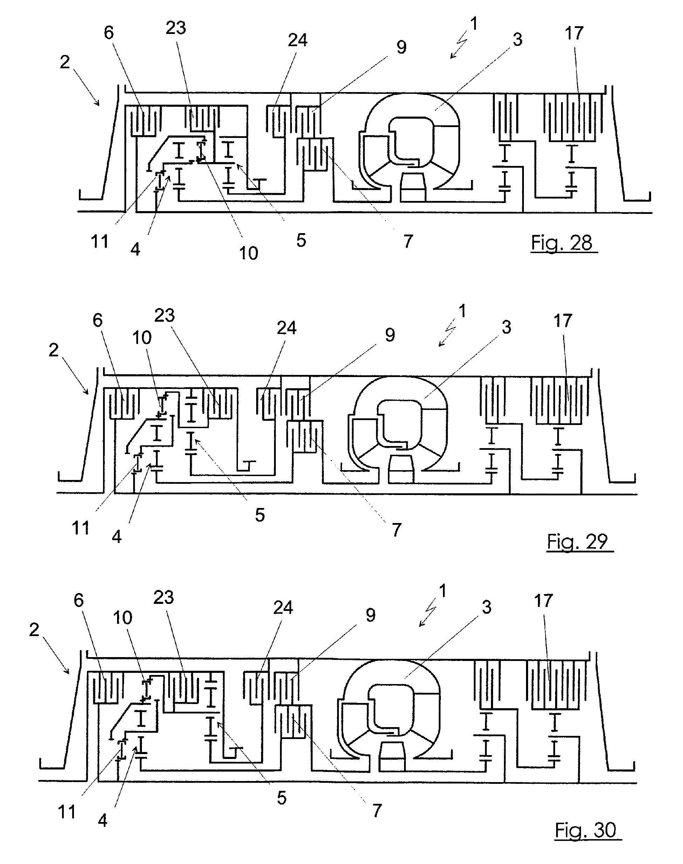

Anstelle der Lamellenkupplung im Eingangskorb lässt sich die Erweiterung zum Fünfganggetriebe auch durch eine Lamellenbremse 24 erreichen. Die Figuren 28 bis 30 zeigen verschiedene konstruktive Ausgestaltungen eines solchen Aufbaus. Da Bremsen immer leichter zu handhaben und anzusteuern sind als Kupplungen, haben diese Ausgestaltungen entsprechende Vorteile gegenüber denen mit einer Kupplung. Ansonsten sind verschiedene Anordnungen der Kupplungen im Verhältnis zu den Planetensätzen 4, 5 im Wesentlichen analog den Figuren 19 fortfolgende zu erkennen.

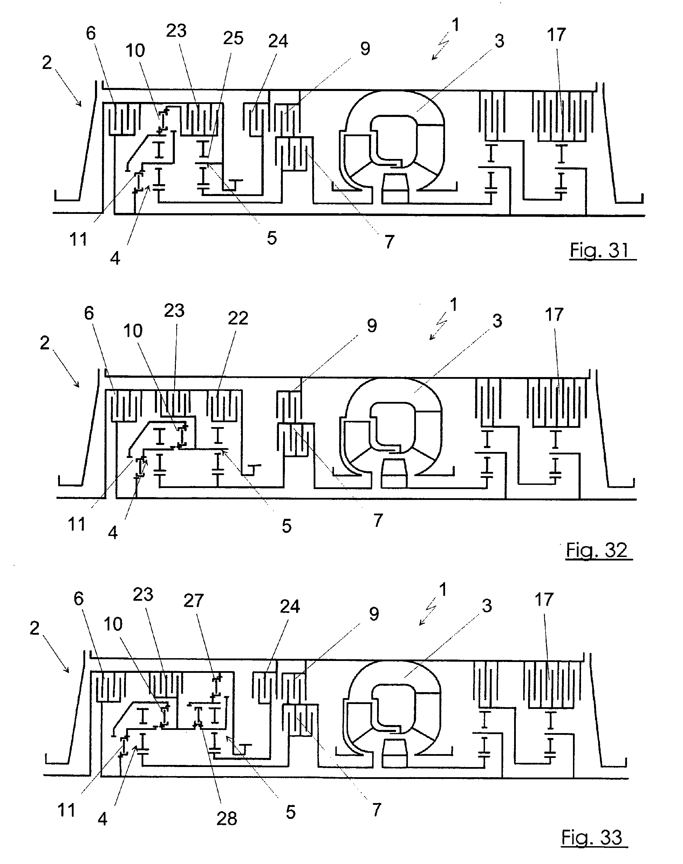

Auch im folgenden Beispiel der Figur 31 ist wiederum der 3. Gang der direkte Gang. Bei fest verbundenem Steg 25 wird bis zum 4. Gang die Bremse 24 geöffnet und die zweite Durchgangskupplung 23 geschlossen. Um für den 5. Gang durch den zweiten Planetensatz 5 die Drehmomente weiter zu verringern, wird dies umgekehrt, also die Bremse 24 geschlossen und die zweite Durchgangskupplung 23 geöffnet. Es ergibt sich somit eine weitere Übersetzung ins Schnelle.

In Figur 32 ist eine weitere Alternative dargestellt, bei der beide Planetensätze 4, 5 auf der Pumpenwelle 26 abgestützt sind. Auch eine solche konstruktive Lösung ist denkbar, allerdings ändert sich die Drehmomentverteilung zwischen dem hydrodynamischen und dem mechanischen Leistungszweig deutlich, so dass weitere Anpassungen des Getriebes 1 notwendig sind.

Wie in Figur 33 dargestellt, lässt sich das erfinderische Prinzip der Änderung des Kopplungsschemas des Vierganggetriebes natürlich auch für den zweiten Planetensatz 5 anwenden. Aus dem oben beschriebenen Aufbau des Fünfganggetriebes wird so mit minimalem Mehraufwand an Bauraum und zwei weitere Klauenkupplungen 27, 28 ein Sechsganggetriebe. Durch die Änderung des Kopplungsschemas des zweiten Planetensatzes 5 ergibt sich sowohl eine Erhöhung des Drehmoments in den ersten beiden Gängen als auch ein "längerer" 6. Gang. Der direkte Gang ist in diesem Fall dann der 4. Gang.

Wie bereits beim Fünfganggetriebe beschrieben sind die verschiedenen Möglichkeiten der Verwendung von einer Lamellenkupplung oder einer Lamellenbremse und deren Anordnung möglich, auch wenn in Figur 33 nur eine der Möglichkeiten dargestellt ist.

Überhaupt sind alle beschreiben Möglichkeiten mit verschiedenen Arten von Kupplungen und/oder Bremsen bei allen drei dargestellten Getrieben durch einfaches fachmännisches Anpassen miteinander kombinierbar und untereinander austauschbar, ohne dass damit ein Aufbau außerhalb der vorliegenden Erfindung entsteht.

### Bezugszeichenliste

- 1: Getriebe
- 2: Eingangsbereich
- 3: Wandler
- 4: Planetensatz
- 5: Planetensatz
- 6: Lamellenkupplung (Durchgangskupplung)
- 7: Lamellenkupplung (Pumpenkupplung)
- 8: Lamellenkupplung
- 9: Lamellenbremse
- 10: Klauenkupplung
- 11: Klauenkupplung
- 12: Antrieb
- 13: Außenkranz des Planetensatzes 4
- 14: Planetenträgerwelle
- 15: Steg des Planetensatzes 4
- 16: Sonne des Planetensatzes 4
- 17: Lammellenkupplung (Rückwärtsgang)
- 18: Lamellenkupplung
- 19: Lamellenkupplung
- 20: Lamellenkupplung
- 21: Lamellenkupplung
- 22: Lamellenkupplung
- 23: Lamellenkupplung (Zweite Durchgangskupplung)
- 24: Lamellenbremse
- 25: Steg des Planetensatzes 5
- 26: Pumpenwelle
- 27: Klauenkupplung
- 28: Klauenkupplung

## Patentansprüche

1. Automatgetriebe mit wenigstens einem Planetensatz, **gekennzeichnet, durch** einen parallel zu diesem Planetensatz (4) verlaufenden Weg der Drehmomentübertragung, wobei dieser Planetensatz (4) in einer Gangstufe des Getriebes (1) nicht zur Drehmomentübertragung genutzt ist und ohne Relativdrehzahl seiner Bauteile untereinander umläuft, wobei in dieser Gangstufe die Kopplungsstruktur dieses Planetensatzes (4) über Kupplungs- und/oder Bremselemente (10,11) veränderbar ist.

2. Automatgetriebe nach Anspruch 1, **dadurch gekennzeichnet, dass** die Kopplungsstruktur über zwei Klauenkupplungen (10,11) veränderbar ist.

3. Automatgetriebe nach Anspruch 2, **dadurch gekennzeichnet, dass** die Klauenkupplungen (10, 11) hydraulisch betätigt sind.

4. Automatgetriebe nach Anspruch 2, **dadurch gekennzeichnet, dass** die Klauenkupplungen (10, 11) mechanisch betätigt sind.

5. Automatgetriebe nach Anspruch 4, **dadurch gekennzeichnet, dass** die Klauenkupplungen (10, 11) über Hebel betätigt sind, wobei die Hebel aus einem Gehäuse des Getriebes (1) herausgeführt sind.

6. Automatgetriebe nach einem der Ansprüche 3 bis 5, **dadurch gekennzeichnet, dass** die Rückstellung der betätigten Kupplungen (10, 11) durch Federelemente realisiert ist.

7. Automatgetriebe nach einem der vorhergehenden Ansprüche, **dadurch gekennzeichnet, dass** es einen hydrodynamischen Wandler (3) aufweist.

8. Automatgetriebe nach Anspruch 7, **dadurch gekennzeichnet, dass** das Getriebe so ausgebildet ist, dass in der niedrigsten Gangstufe das Pumpenlaufrad des hydrodynamischen Wandler (3) frei drehbar ist.

9. Automatgetriebe nach einem der vorhergehenden Ansprüche, **dadurch gekennzeichnet, dass** der Planetensatz (4), dessen Kopplungsstruktur veränderbar ist, der einzige Planetensatz (4) in einem Eingangsbereich (2) des Getriebes (1) ist.

10. Automatgetriebe nach einem der Ansprüche 1 bis 8, **dadurch gekennzeichnet, dass** der Planetensatz (4), dessen Kopplungsstruktur veränderbar ist, einer von wenigstens zwei Planetensätze (4, 5) in einem Eingangsbereich (2) des Getriebes (1) ist.

11. Automatgetriebe nach Anspruch 10, **dadurch gekennzeichnet, dass** auch der zweite Planetensatz (5) in einer Gangstufe keine Drehmoment überträgt und in dieser in dieser Gangstufe die Kopplungsstruktur dieses Planetensatzes (5) über Kupplungs- und/oder Bremselemente (10, 11) veränderbar ist.
